# EUROPEAN PATENT APPLICATION

(11) **EP 3 061 348 A1**
(43) Date of publication of application: **31.08.2016**
(21) Application number: 15382086.5
(22) Date of filing: 27.02.2015
(51) Int. Cl.: A01N 43/80, A01P 9/00

(54) **METHOD FOR REMOVING A PLAGUE OF APPLE SNAIL FROM A RICE CROP**

(71) Applicant: Kenogard, S.A., 08007 Barcelona (ES)
(72) Inventor: Torres Esteban, Josep Maria, 08018 Barcelona (ES)
(74) Representative: Oficina Ponti, SLP

(57) **Abstract**

A method for removing a plague of apple snail from a rice crop, comprising the step of applying, in the stagnant water of a rice crop, a mixture comprising 5-chloro-2-methyl-4-isothiazolin-3-one (CMI) and 2-methyl-4-isothiazolin-3-one (MI) in a ratio (CMI:MI) between 1:1 and 4:1 by weight. The application of the mixture of isothiazolones in the disclosed ratios turns out to be very effective in order to remove the plague of apple snail from a rice crop.

## Description

The present invention relates to a method for removing a plague of apple snail, *Pomacea insularum (maculata)* or *Pomacea canaliculata,* from a rice crop.

### BACKGROUND OF THE INVENTION

The apple snail is native to South America and spread to Asia during the 80s, reaching Europe in the Delta del Ebro (Spain) in 2009.

It is an invasive species of freshwater aquatic gastropod mollusc having a dual respiratory system, pulmonary and branchial, and individuals of different sexes (male/female). The female can lay about 1,000 eggs per season in about three aerial lays of about 300 eggs each. The hatching occurs at about 15 days and within 2/3 months of life the individuals are capable of reproducing themselves.

This snail species is currently listed as one of the 100 most dangerous species in the world. The losses caused by this plague are difficult to quantify but they range between 20-90% of the crop in the affected areas.

Note that up to now no country has been succeeded in removing the plague from areas where it has been introduced. The resistance and adaptation ability of the apple snail to adverse environmental conditions, along with its high reproductive capacity, have made its removal so far very difficult.

It is well known the use of physical, chemical and biological methods for treating the plague of apple snail in common rice crops. Chemical methods are based on the use of substances like Endosulfan, Metaldehyde, Chelated Copper, Saponins or Calcium cyanamide. Most of these chemicals are toxic to the environment and also inefficient for treating the snail.

In Spain, the mainly affected area is circumscribed to the Delta del Ebro. In this area, since its recent occurrence up to now the control measures against the plague of apple snail have been based on physical barriers (filters, traps, etc ...) to try to avoid its spread, drying fields during winter in some affected areas or flooding with salt water (from the sea) in other areas, supplemented with the application of saponins in the field.

Nevertheless, despite all these measures the expected results have not been achieved and the spread of the plague has been increasing.

It has been observed that physical barriers do not prevent the entry of baby snails in the field, and additionally the plague of the snail is favored by the plague of the crayfish, which by creating galleries between rice fields and drains or adjacent fields, establishes pathways for the apple snail.

When drying fields in winter, the effectiveness of the measure is subject to weather conditions, since any rain in this period will help to keep alive those snails which had been buried in the fields waiting for the optimal conditions for its development the following spring.

Flooding fields with salt water, although effective, has a great impact on the local fauna and a strong opposition from farmers, whose crops are affected by the negative effect on plants as a result of salt retention in fields with clay soils.

With regard to the treatment with saponins, it should be said that it is a product for which an authorization for exceptional use during the growing season to control plagues has been given, since it is the only measure of chemical control available to farmers once the rice cultivation cycle begins.

Nevertheless, there are certain factors affecting the efficacy of treatment with saponins. For example, saponins do not affect snails that are buried or still in lethargy period. In addition, saponins seem to have some difficulty in controlling the smallest individuals, since these can close its operculum in a tight manner when they notice the harmful effects of saponins and remain with their operculum closed until the product has been diluted and has no longer effect.

### DESCRIPTION OF THE INVENTION

The object of the present invention is to solve the mentioned drawbacks by providing an effective method for removing a plague of apple snail from a rice crop.

In accordance with this object, according to a first aspect, the present invention provides a method for removing a plague of apple snail from a rice crop, comprising the step of applying, in the stagnant or standing water of a rice crop, a mixture comprising 5-chloro-2-methyl-4-isothiazolin-3-one (CMI) and 2-methyl-4-isothiazolin-3-one (MI) in a ratio (CMI:MI) between 1:1 and 4:1 by weight, preferably a 3:1 ratio by weight.

The performed tests have revealed that the application of the mixture of isothiazolones in the mentioned ratios is very effective for removing a plague of apple snail from a rice crop. The mixture is very soluble in water, and turned out to be very active and effective at low doses and readily biodegradable. Furthermore, the application of the mixture is very easy and convenient, being possible to be performed, for example, either by a spray using a tractor which moves over the stagnant water of the crop or by direct application to the inlet of water in the field.

The claimed mixture of isothiazolones acts on the cell membrane of the gills of the apple snail, preventing the functioning of the branchial respiratory system, producing thereby its final death. Additionally, this mixture is friendly with the environment and also with local wildlife of the Delta del Ebro.

Preferably, the concentration of the mixture in the stagnant water is higher than 5 ppm, and more preferably, the concentration is between 5 ppm and 30 ppm, advantageously between 10 ppm and 22 ppm. It has been found that this concentration range is effective and also environmentally acceptable for the environment.

Advantageously, the 5-chloro-2-methyl-4-isothiazolin-3-one (CMI) and the 2-methyl-4-isothiazolin-3-one (MI) are present in the mixture, prior to application, in a concentration higher than 0.5% by weight.

Although the product may be applied in areas of rice crops at any season of the year, preferably the application of said mixture is performed between the harvest of the rice and the rice germination in the following season. Nevertheless, it has been found that the mixture is preferably applied before the rice germination, for example, when the environment temperature is at or above 18°C, since in this period the apple snail is more aggressive in newly germinated seedlings. Tests performed in the rice germination laboratory in an aqueous medium (containing 15 ppm and 30 ppm of isothiazolone mixture) have shown that, after ten days, the rice germination, both the roots and the first leaf, is not affected by the mixture.

After a period equal to or higher than eight days after the application of the mixture, the farmer can proceed to open the inlet and outlet of water in the field to renew and circulate the water.

In the present invention, by "apple snail" is intended to mean a snail of the species *Pomacea insularum (maculata),* a snail of the species *Pomacea canaliculata (Ampullaria canaliculata)* or a snail of genus *Ampullaria.*

By "rice crop" is intended to mean a crop of a plant of the cereal family referred as common rice, preferably a crop of the plant *Oryza sativa.*

### DESCRIPTION OF EXAMPLES

For a better understanding of what has been disclosed so far assays assessing the efficiency of the mixture in the laboratory and some examples of application in field are provided which do not intend to limit in any way the scope of the present invention.

### Efficiency assays of the mixture in lab

Four plastic containers with eight apple snails, each with a level of solution of about 5 cm and a concentration of isothiazolones in solution of 0 ppm, 7.5 ppm, 15 ppm and 30 ppm, were used. The obtained results are shown in Table 1 below:

| Container | ppm of mixture | 24 h | 5 days | 15 days |
|---|---|---|---|---|
| R-1 | 0 | *8 NM* | *8 NM* | *8 NM* |
| R-2 | 30 ppm | *8 II* | *8 II* | *8 II* |
| R-3 | 15 ppm | *8 II* | *8 II* | *8 II* |
| R-4 | 7.5 ppm | *8 II* | *8 II* | *8 II* |

where:
the mixture is 5-chloro-2-methyl-4-isothiazolin-3-one (CMI) and 2-methyl-4-isothiazolin-3-one in a ratio (CMI:MI) about 3:1, preferably 3:1 by weight.
*NM* stands for individuals with normal mobility
*II* stands for individuals with no mobility (immobile individuals)

In order to verify that the immobile individuals are indeed dead, the solutions of the four containers have been replaced with clean water obtaining the following results shown in Table 2 below.

| Container | ppm of mixture | 48 h | 8 days |
|---|---|---|---|
| R-1 | 0 | *8 NM* | *8 NM* |
| R-2 | 30 ppm replaced with water | *8 II* | *8 DI* |
| R-3 | 15 ppm replaced with water | *8 II* | *8 DI*⁵ |
| R-4 | 7.5 ppm replaced with water | *8 II* | *8 DI* |

where;
the mixture is 5-chloro-2-methyl-4-isothiazolin-3-one (CMI) and 2-methyl-4-isothiazolin-3-one (MI) in a ratio (CMI:MI) 3:1 by weight.
*NM* stands for individuals with normal mobility
*II* stands for individuals with no mobility (immobile individuals)
*DI* stands for individuals undergoing decomposition

From these laboratory results it can be concluded that the product is highly effective at low doses. The dosage of the mixture in the field in order to obtain a maximum efficiency and minimum aggression on the environment can be set between 5 ppm and 30 ppm.

### Examples of application in field: plots for rice production

### Example 1

In a rice field (paddy) of 1.1 ha overrun with apple snails (*Pomacea insularum*) and within 10 days after sowing, with the rice plants in a state of germination and a height of stagnant water of about 5 cm, the mixture is homogeneously applied by a tractor provided with a regulated sprinkler. The mixture consists of 300 kg of 5-chloro-2-methyl-4-isothiazolin-3-one (CMI) and 2-methyl-4-isothiazolin-3-one (MI) in a ratio (CMI:MI) 3:1 by weight, at 3% by weight.

The visual outcome after 3 days of application in the treated field shows more than 1,000 dead specimen, none being alive. After 6 days, the visual inspection is repeated without finding any significant difference with respect to previous visual inspection.
After 8 days, the inlets and outlets of water in the field were opened, so that the circulation thereof was normal.

### Biodegradation of the mixture applied in the field of Example 1

30 minutes after having applied the product over the field of Example 1, 6 samples were taken at different points, homogenized and analyzed by High Performance Liquid Chromatography (HPLC) with the following result:
- CMI (5-chloro-2-methyl-4-isothiazolin-3-one): 8.558 ppm
- MI (2-methyl-4-isothiazolin-3-one): 3.137 ppm
- Total mixture CMI-MI: 11.695 ppm

In the same way the operation has been performed at 3 days and then at 6 days. After analyzing such samples by High Performance Liquid Chromatography (HPLC), the following results were obtained:

| | 30 min | 3 days | 6 days |
|---|---|---|---|
| CMI | *8.558 ppm* | *0.600 ppm* | - |
| MI | *3.137 ppm* | *1.719 ppm* | *0.038 ppm* |
| Total mixture CMI-MI | *11.695 ppm* | *2.318 ppm* | *0.038 ppm* |

where:
CMI stands for 5-chloro-2-methyl-4-isothiazolin-3-one
MI stands for 2-methyl-4-isothiazolin-3-one
the total mixture is 5-chloro-2-methyl-4-isothiazolin-3-one and 2-methyl-4-isothiazolin-3-one in a ratio (CMI:MI) about 3:1, preferably 3:1 by weight.

From these results it is inferred that the mixture applied to the field breaks down very easily, virtually disappearing after six days of treatment.

### Example 2

In a rice field of 8,000 m² identified as overrun by apple snail (*Pomacea insularum*) and after 10 days of harvest, with a height of stagnant water about 5 cm, five cages are placed distributed in different points of the plot with 30 alive snails in each one. They are treated with 330 kg of the mixture 5-chloro-2-methyl-4-isothiazolin-3-one (CMI) and 2-methyl-4-isothiazolin-3-one (MI) in a ratio (CMI:MI) 3:1 at 3% by weight. The application is homogenously carried out with a tractor provided with a regulated sprayer until obtaining a concentration in stagnant water of 22.5 ppm.

After 48 h all the snails in cages were dead.

After 8 days, the inlets and outlets of water in the field are opened and the normal flow is maintained.

### Example 3

In a rice field of 12,000 m² identified as overrun by apple snail (*Pomacea insularum*) and after 10 days of harvest, with a height of stagnant water about 5 cm, five cages are placed distributed in different points of the plot with 30 alive snails in each one. They are treated with 660 kg of the mixture 5-chloro-2-methyl-4-isothiazolin-3-one (CMI) and 2-methyl-4-isothiazolin-3-one (MI) in a ratio (CMI:MI) 3:1 at 1.5% by weight. The application is homogenously carried out with a tractor provided with a regulated sprayer until obtaining a concentration in stagnant water of 15 ppm.

After 48 h all the snails in cages were dead.

After 8 days, the inlets and outlets of water in the field are opened and the normal flow is maintained.

Although reference has been made to a specific embodiment of the invention, it is apparent to one skilled in the art that the method disclosed herein is susceptible of numerous variations and modifications, and that all the mentioned details can be replaced by other technically equivalent, without departing from the scope of protection defined by the appended claims. For example, although the described examples refer to a treatment against a plague of apple snail of species *Pomacea insularum* species, similar results can be obtained against a plague of apple snail of *Pomacea canaliculata* species or against a plague of any snail of the genus *Ampullaria.*

## Claims

1. A method for removing a plague of apple snail from a rice crop, comprising the step of applying, in the stagnant water of a rice crop, a mixture comprising 5-chloro-2-methyl-4-isothiazolin-3-one (CMI) and 2-methyl-4-isothiazolin-3-one (MI) in a ratio (CMI:MI) between 1:1 and 4:1 by weight.

2. The method, according to claim 1, wherein said ratio is 3:1.

3. The method, according to any of claims 1 to 2, wherein the concentration of the mixture in the stagnant water is higher than 5 ppm.

4. The method, according to claim 3, wherein the concentration of the mixture in the stagnant water is between 10 ppm and 22 ppm.

5. The method, according to any of claims 1 to 4, wherein said 5-chloro-2-methyl-4-isothiazolin-3-one (CMI) and said 2-methyl-4-isothiazolin-3-one (MI) are present in the mixture before the application in a concentration higher than 0.5% by weight.

6. The method, according to claim 1, wherein the application of said mixture is carried out between the harvest of the rice and the rice germination in the following season.

7. The method, according to claim 6, wherein the application of said mixture is carried out before starting the rice germination and after sowing.

8. The method, according to claim 1, further comprising the step of opening the inlet and outlet of water of the crop field in order to circulate the water stagnant in the crop.

9. The method, according to claim 8, wherein said step of opening the inlet and outlet of water is carried out after a period of time equal to or higher than three days.
